# EUROPEAN PATENT APPLICATION

(11) **EP 4 071 521 A1**
(43) Date of publication of application: **12.10.2022**
(21) Application number: 21756177.8
(22) Date of filing: 08.01.2021
(51) Int. Cl.: G01W 1/10, E02F 9/26, G06Q 50/08, G08B 31/00

(54) **DISASTER COUNTERMEASURE SUPPORT SERVER, DISASTER COUNTERMEASURE SUPPORT SYSTEM, AND DISASTER COUNTERMEASURE SUPPORT METHOD**

(30) Priority: 18.02.2020 JP 2020025646
(71) Applicant: KOBELCO CONSTRUCTION MACHINERY CO., LTD., Hiroshima-shi Hiroshima 731-5161 (JP)
(72) Inventor: OTANI, Masaki, Hiroshima-shi, Hiroshima 731-5161 (JP); SAIKI, Seiji, Hiroshima-shi, Hiroshima 731-5161 (JP); YAMAZAKI, Yoichiro, Hiroshima-shi, Hiroshima 731-5161 (JP)
(74) Representative: Schön, Christoph
(86) International application number: PCT/JP2021/000475
(87) International publication number: WO 2021/166480

(57) **Abstract**

A technique capable of providing information about the possibility of a work machine being affected by a disaster to persons involved in the work machine in real time. The possibility of a work machine 40 being affected by a disaster in a second designated area including an existence position of the work machine 40 is predicted based on an amount of rainfall in a first designated area. A hazard map representing a result of the prediction of the possibility of the work machine 40 being affected by a disaster in the second designated area is outputted to a remote output interface 220 in a remote operation apparatus 20 (a client) (or a management output interface 620 in a management client 60). Accordingly, a user can take measures to reduce the possibility of the work machine being affected by a disaster, for example, to communicate with the persons involved in order to move the work machine 40 from a current position.

## Description

### Technical Field

The present invention relates to a technique for providing information about the possibility of a work machine being affected by a disaster to an operator or the like of the work machine.

### Background Art

A technique for designating a dike break point of any river as an assumed dike break point and analyzing flooding in real time based on river information such as an amount of rainfall and a water level (e.g., information such as observation data of a rainfall amount radar, a telemeter, and the like, water level prediction data, a disaster-affected depth a disaster-affected range, a dike break width, and the like) has been proposed (see, e.g., Patent Literature 1). Only input of any dike break point of the river makes it possible to use the river information at a current time point, calculate analysis of flooding and prediction of a water level of a river channel in real time, and dynamically display an assumed disaster-affected area for each dike break point and for each time series.

A technique for calculating the possibility of a disaster occurrence with high accuracy and providing, in a diagnosis of a risk of being affected by a disaster in a diagnosis target area for supporting decision making of a road administrator or the like, the diagnosis of the risk of being affected by a disaster in real time and a diagnosis result easily understandable for a user has been proposed (see, e.g., Patent Literature 2).

In the diagnosis of the risk of being affected by a disaster in the diagnosis target area, a technique for diagnosing a risk of being affected, which can make diagnosis of the risk of being affected by a disaster in real time and provision of a diagnosis result easily understandable for a user compatible with each other has been proposed (see, e.g., Patent Literature 3). According to the technique, a storage amount of each of meshes is calculated based on information about a rainfall distribution. Further, a virtual water level of the mesh the storage amount of which is not less than a maximum storage amount of a virtual conduit and is less than an upper-limit storage amount as a sum of the maximum storage amount of the virtual conduit and a maximum storage amount of a virtual manhole is calculated. A virtual water level of the mesh the storage amount of which is not less than the upper-limit storage amount is calculated, and various amounts required to evaluate a risk of each of the meshes being affected by a disaster are calculated using the virtual water level calculated depending on the storage amount. The diagnosis result of the risk of being affected by a disaster is provided as a hazard map in real time or support information for operating a rain water drainage facility and a rain water storage facility to be operated in real time. For example, the mesh the storage amount of which exceeds the maximum storage amount is displayed in yellow, and the mesh the storage amount of which exceeds the upper-limit storage amount is displayed in red.

### Citation List

### Patent Literature

Patent Literature 1: Japanese Patent Laid-Open No. 2004-197554
Patent Literature 2: Japanese Patent Laid-Open No. 2017-194344
Patent Literature 3: Japanese Patent Laid-Open No. 2019-139455

### Summary of Invention

### Technical Problem

When a work machine such as a construction machine is affected by a disaster due to external water flooding or internal water flooding, there occurs a situation where the work machine fails, for example.

The present invention is directed to providing a technique capable of providing information about the possibility of a work machine being affected by a disaster to persons involved in the work machine in real time.

### Solution to Problem

A disaster countermeasure support server according to the present invention includes
a first support processing element configured to recognize a first designated area that affects the possibility of a work machine being affected by a disaster in a second designated area including an existence position of the work machine depending on whether an amount of rainfall is large or small and recognize an amount of rainfall in the first designated area, and
a second support processing element configured to predict the possibility of the work machine being affected by a disaster in the second designated area based on the existence position of the work machine and the amount of rainfall in the first designated area, which have been recognized by the first support processing element, generate a hazard map representing a result of the prediction of the possibility of the work machine being affected by a disaster in the second designated area, and output the hazard map to an output interface in a client based on communication with the client.

According to the disaster countermeasure support server having the configuration, the possibility of the work machine being affected by a disaster in the second designated area including the existence position of the work machine is predicted based on the amount of rainfall in the first designated area. If determination whether an amount of rainfall in an area is large or small affects determination whether the possibility of the work machine being affected by a disaster in the second designated area where the work machine exists is high or low, the area is recognized as the first designated area.

The hazard map representing the prediction result of the possibility of the work machine being affected by a disaster in the second designated area is outputted to the output interface in the client. Accordingly, a user of the client can be made to recognize whether the possibility of the work machine existing in the second designated area being affected by a disaster is high or low through the hazard map. In response thereto, the user can take measures to reduce the possibility of the work machine being affected by a disaster, for example, to communicate with persons involved in order to move the work machine from a current position.

### Brief Description of Drawings

FIG. 1 is an explanatory diagram relating to a configuration of a disaster countermeasure support system according to an embodiment of the present invention.
FIG. 2 is an explanatory diagram relating to a configuration of a remote operation apparatus.
FIG. 3 is an explanatory diagram relating to a configuration of a work machine.
FIG. 4 is an explanatory diagram relating to a function of the disaster countermeasure support system.
FIG. 5 is an explanatory diagram relating to time series patterns of an amount of rainfall in a first designated area and time series patterns of a disaster-affected depth in a second designated area.
FIG. 6 is an explanatory diagram relating to a display mode of a hazard map.
FIG. 7 is an explanatory diagram relating to designated line segments in the hazard map.
FIG. 8A is an explanatory diagram relating to a designated topographical sectional view along a designated line segment P1 - P2 illustrated in FIG. 7.
FIG. 8B is an explanatory diagram relating to a designated topographical sectional view along a designated line segment Q1 - Q2 illustrated in FIG. 7.
FIG. 9 is an explanatory diagram relating to a function of the disaster countermeasure support system.
FIG. 10 is an explanatory diagram relating to a display mode of an environment image.

### Description of Embodiment

### (Configuration of Disaster Countermeasure Support System)

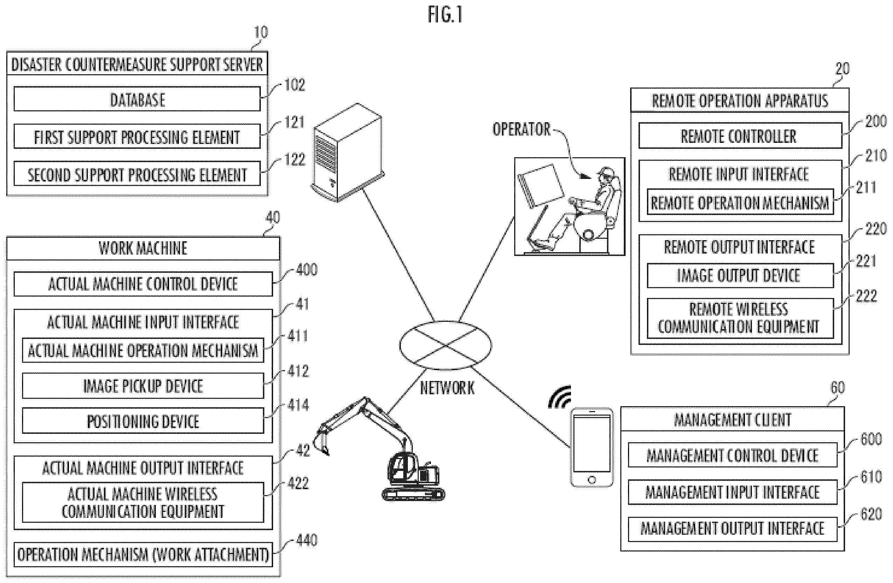

A disaster countermeasure support system as an embodiment of the present invention illustrated in FIG. 1 comprises a disaster countermeasure support server 10 and a remote operation apparatus 20 for remotely operating a work machine 40. The disaster countermeasure support server 10, the remote operation apparatus 20, the work machine 40, and a management client 60 are configured to be network-communicable with one another. An intercommunication network between the disaster countermeasure support server 10 and the remote operation apparatus 20 and an intercommunication network between the disaster countermeasure support server 10 and the work machine 40 may be the same as or different from each other.

### (Configuration of Disaster Countermeasure Support Server)

The disaster countermeasure support server 10 comprises a database 102, a first support processing element 121, and a second support processing element 122. The database 102 stores and holds picked-up image data or the like. The database 102 may be constituted by a database server separate from the disaster countermeasure support server 10. Each of the support processing elements is constituted by an arithmetic processing unit (a single core processor or a multi-core processor or a processor core constituting the processor), and reads required data and software from a storage device such as a memory and performs arithmetic processing, described below, conforming to the software with the data used as a target.

### (Configuration of Remote Operation Apparatus)

The remote operation apparatus 20 comprises a remote control device 200, a remote input interface 210, and a remote output interface 220. The remote control device 200 is constituted by an arithmetic processing unit (a single core processor or a multi-core processor or a processor core constituting the processor), and reads required data and software from a storage device such as a memory and performs arithmetic processing conforming to the software with the data used as a target. The remote input interface 210 comprises a remote operation mechanism 211. The remote output interface 220 comprises an image output device 221 and remote wireless communication equipment 222.

The remote operation mechanism 211 includes a traveling operation device, a turning operation device, a boom operation device, an arm operation device, and a bucket operation device. Each of the operation devices has an operation lever that receives a rotation operation. The operation lever (traveling lever) of the traveling operation device is operated to move a lower traveling body 410 of the work machine 40. The traveling lever may also serve as a traveling pedal. For example, a traveling pedal fixed to a base portion or a lower end portion of the traveling lever may be provided. An operation lever (turning lever) of the turning operation device is operated to move a hydraulic turning motor constituting a turning mechanism 430 in the work machine 40. An operation lever (boom lever) of the boom operation device is operated to move a boom cylinder 442 in the work machine 40. An operation lever (arm lever) of the arm operation device is operated to move an arm cylinder 444 in the work machine 40. An operation lever (bucket lever) of the bucket operation device is operated to move a bucket cylinder 446 in the work machine 40.

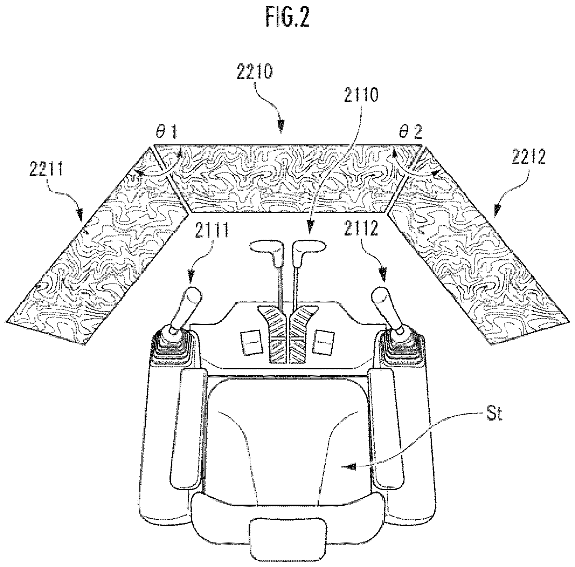

Each of the operation levers constituting the remote operation mechanism 211 is arranged around a seat St for an operator to sit, as illustrated in FIG. 2, for example. Although the seat St has a form such as a high back chair with armrests, the seat St may be a seating portion in any form in which the operator can sit, for example, a form like a low back chair with no headrest or a form like a chair with no backrest.

A pair of left and right traveling levers 2110 respectively corresponding to left and right crawlers are laterally arranged side by side in front of the seat St. One operation lever may also serve as a plurality of operation levers. For example, a left-side operation lever 2111 provided in front of a left-side frame of the seat St illustrated in FIG. 2 may function as an arm lever when operated in a front-rear direction and function as a turning lever when operated in a left-right direction. Similarly, a right-side operation lever 2112 provided in front of a right-side frame of the seat St illustrated in FIG. 2 may function as a boom lever when operated in the front-rear direction and function as a bucket lever when operated in the left-right direction. A lever pattern may be arbitrarily changed in response to an operation instruction of the operator.

The image output device 221 comprises a central image output device 2210, a left-side image output device 2211, and a right-side image output device 2212 respectively having substantially rectangular screens arranged in front of, diagonally leftward in front of, and diagonally rightward in front of the seat St, as illustrated in FIG. 2, for example. Respective shapes and sizes of the screens (image display regions) of the central image output device 2210, the left-side image output device 2211, and the right-side image output device 2212 may be the same as or different from one another.

As illustrated in FIG. 2, a right edge of the left-side image output device 2211 is adjacent to a left edge of the central image output device 2210 such that the screen of the central image output device 2210 and the screen of the left-side image output device 2211 form an inclined angle θ1 (e.g., 120° ≤ θ1 ≤ 150°). As illustrated in FIG. 2, a left edge of the right-side image output device 2212 is adjacent to a right edge of the central image output device 2210 such that the screen of the central image output device 2210 and the screen of the right-side image output device 2212 form an inclined angle θ2 (e.g., 120° ≤ θ2 ≤ 150°). The inclined angles θ1 and θ2 may be the same as or different from each other.

The respective screens of the central image output device 2210, the left-side image output device 2211, and the right-side image output device 2212 may be parallel to one another in a vertical direction, or may be inclined in the vertical direction. At least one image output device of the central image output device 2210, the left-side image output device 2211, and the right-side image output device 2212 may be constituted by a plurality of separated image output devices. For example, the central image output device 2210 may be constituted by a pair of image output devices, which are vertically adjacent to each other, each having a substantially rectangular screen. Each of the image output devices 2210 to 2212 may further comprise a speaker (voice output device).

### (Configuration of Work Machine)

The work machine 40 comprises an actual machine control device 400, an actual machine input interface 41, an actual machine output interface 42, and a work attachment 440. The actual machine control device 400 is constituted by an arithmetic processing unit (a single core processor or a multi-core processor or a processor core constituting the processor), and reads required data and software from a storage device such as a memory and performs arithmetic processing conforming to the software with the data used as a target.

The work machine 40 is a crawler shovel (construction machine), for example, and comprises a crawler-type lower traveling body 410 and an upper turning body 420 to be turnably loaded into the lower traveling body 410 via the turning mechanism 430. A front left side portion of the upper turning body 420 is provided with a cab 424 (an operation room). A front central portion of the upper turning body 420 is provided with the work attachment 440.

The actual machine input interface 41 comprises an actual machine operation mechanism 411, an actual machine image pickup device 412, and a positioning device 414. The actual machine operation mechanism 411 comprises a plurality of operation levers arranged similarly to the remote operation mechanism 211 around a seat arranged in the cab 424. The cab 424 is provided with a driving mechanism or a robot that receives a signal corresponding to an operation mode of the remote operation levers and moves an actual machine operation lever based on the received signal. The actual machine image pickup device 412 is installed in the cab 424, for example, and picks up an image of an environment including at least a part of the work attachment 440 through a front window and a pair of left and right side windows. Some or all of the front window and the side windows may be omitted. The positioning device 414 is constituted by a GPS and a gyro sensor or the like, if necessary.

The actual machine output interface 42 comprises actual machine wireless communication equipment 422.

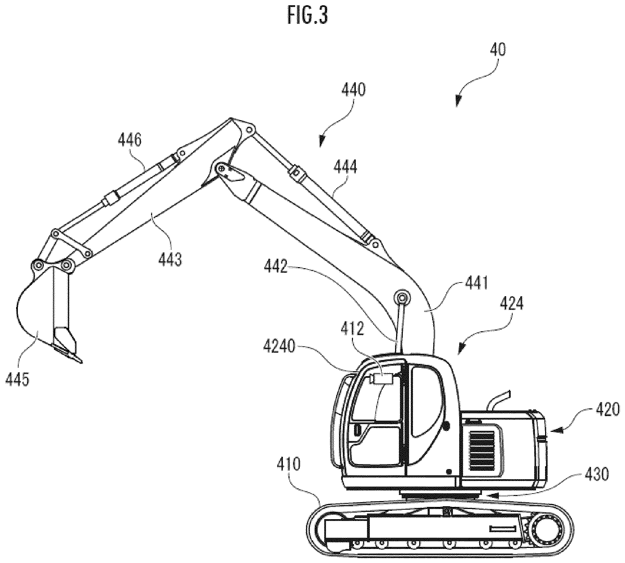

As illustrated in FIG. 3, the work attachment 440 as the actuation mechanism comprises a boom 441 mounted on the upper turning body 420 to be raisable and lowerable, an arm 443 rotatably connected to a distal end of the boom 441, and a bucket 445 rotatably connected to a distal end of the arm 443. The boom cylinder 442, the arm cylinder 444, and the bucket cylinder 446 each constituted by an expandable and contractable hydraulic cylinder are mounted on the work attachment 440.

The boom cylinder 442 is interposed between the boom 441 and the upper turning body 420 by expanding and contracting upon being supplied with hydraulic oil to rotate the boom 441 in a rise-fall direction. The arm cylinder 444 is interposed between the arm 443 and the boom 441 by expanding and contracting upon being supplied with hydraulic oil to rotate the arm 443 around a horizontal axis relative to the boom 441. The bucket cylinder 446 is interposed between the bucket 445 and the arm 443 by expanding and contracting upon being supplied with hydraulic oil to rotate the bucket 445 around a horizontal axis relative to the arm 443.

### (Configuration of Management Client)

The management client 60 is a terminal device such as a smartphone or a tablet terminal, and comprises a control device 600, a management input interface 610, and a management output interface 620. The control device 600 is constituted by an arithmetic processing unit (a single core processor or a multi-core processor or a processor core constituting the processor), and reads required data and software from a storage device such as a memory and performs arithmetic processing conforming to the software with the data used as a target.

The management input interface 610 is constituted by a button of a touch panel type and a switch, for example. The management output interface 620 comprises an image output device and wireless communication equipment.

### (First Function)

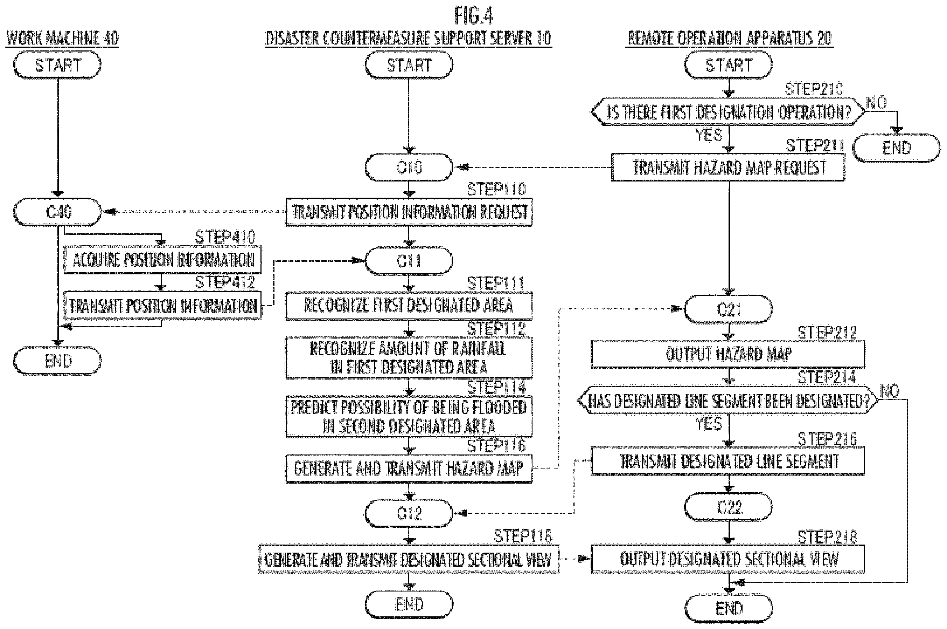

A function of the remote operation support system having the above-described configuration will be described with reference to a flowchart illustrated in FIG. 4. In the flowchart, a block "C •" is used to simplify description, and means transmission and/or reception of data and means a conditional branch in which processing in a branch direction is performed with the transmission and/or the receiving of the data as a condition.

In the remote operation apparatus 20 (or the management client 60), the presence or absence of a first designation operation through the remote input interface 210 by the operator is determined (FIG. 4/STEP210). An example of the "first designation operation" is an operation such as a tap in the remote input interface 210 for designating one work machine 40 in a map representing respective existence positions of a plurality of work machines 40. If a result of the determination is negative (FIG. 4/NO in STEP210), processing subsequent to the determination of the presence or absence of the first designation operation is repeated. On the other hand, if the result of the determination is affirmative (FIG. 4/YES in STEP210), a hazard map request is transmitted to the disaster countermeasure support server 10 through the remote wireless communication equipment 222 (FIG. 4/STEP211). The request includes a work machine identifier, which has been designated through the work machine 40 that has established communication with the remote operation apparatus 20 or the remote input interface 210, for identifying the work machine 40.

In the disaster countermeasure support server 10, if the hazard map request is received (FIG. 4/C10), the first support processing element 121 transmits a position information request to the work machine 40 to be identified by the work machine identifier included in the hazard map (FIG. 4/STEP110).

In the work machine 40, if the position information request is received through the actual machine wireless communication equipment 422 (FIG. 4/C40), the actual machine control device 400 recognizes position information (defined by a latitude and a longitude, or a latitude, a longitude, and a height) of the work machine 40 through the positioning device 414 (FIG. 4/STEP410). The actual machine control device 400 transmits the position information or position data representing the position information to the remote operation apparatus 20 through the actual machine wireless communication equipment 422 (FIG. 4/STEP412).

In the disaster countermeasure support server 10, if the first support processing element 121 recognizes the position information (FIG. 4/C11), the second support processing element 122 recognizes a first designated area (FIG. 4/STEP111). If determination whether an amount of rainfall in an area is large or small affects determination whether the possibility of being affected by a disaster in a second designated area including an existence position of the work machine 40 is high or low, the area is recognized as the first designated area. The first designated area and the second designated area are associated with each other and are registered in the database 102.

A map representing respective positions of work machines 40 is displayed on the remote output interface 220 in the remote operation apparatus 20 (or the management client 60), a point is designated or selected through the remote input interface 210, and position data representing the position of the work machine 40 existing at or closest to the point is transmitted to the disaster countermeasure support server 10 from the remote operation apparatus 20 so that the first support processing element 121 may recognize the position information.

With respect to external water flooding, for example, if the second designated area is an area including the downstream side of a river, an area including the upstream side of the river is recognized as the first designated area. With respect to internal water flooding, an area where there exists a rain water storage facility consecutive to a drainage channel included in the second designated area is recognized as the first designated area. The first designated area and the second designated area may be the same as or different from each other. The first designated area and the second designated area may be spaced apart from each other or adjacent to each other, and respective parts thereof may overlap each other. The first designated area may include the second designated area.

The map representing the respective positions of the work machines 40 is displayed on the remote output interface 220 in the remote operation apparatus 20 (or the management client 60), an area is designated through the remote input interface 210, and designated area data representing the designated area is transmitted to the disaster countermeasure support server 10 from the remote operation apparatus 20 so that the first support processing element 121 may recognize the designated area as the first designated area.

The first support processing element 121 recognizes an amount of rainfall in the first designated area (an amount of rainfall for each unit time) based on communication with a weather information database as a weather information source (FIG. 4/STEP112).

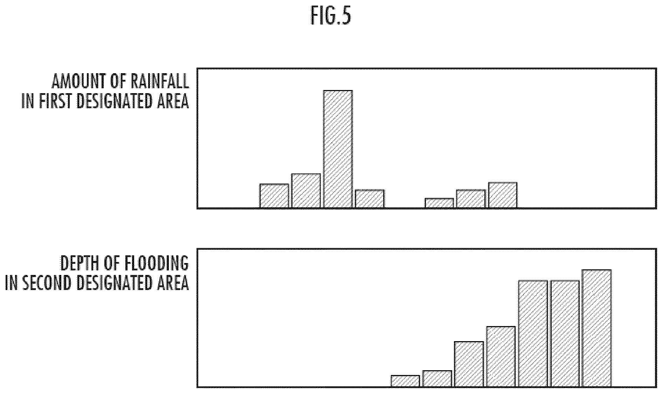

The second support processing element 122 predicts the possibility of the work machine 40 being flooded in the second designated area as the possibility of the work machine 40 being affected by a disaster (FIG. 4/STEP114). For example, time series patterns of the amount of rainfall in the first designated area as illustrated in an upper section of FIG. 5 and time series patterns of a depth of flooding (or the presence or absence of flooding) of a house or the like in the second designated area as illustrated in a lower section of FIG. 5 are associated with each other and are registered in the database 102. When the database 102 is referred to, a time series pattern of a flooded state or a disaster-affected state in the second designated area, which is highest in association with (pattern similarity to) the recent time series pattern of the amount of rainfall in the first designated area may be recognized. The second support processing element 122 may predict a time series pattern of the possibility of the work machine 40 being affected by a disaster based on the time series pattern of the disaster-affected state in the second designated area and generate a hazard map representing a result of the prediction of the time series pattern of the possibility of the work machine 40 being affected by a disaster.

With respect to external water flooding, a water level of a river included in or proximate to the first designated area or the second designated area is considered so that the possibility of being affected by a disaster in the second designated area may be predicted. With respect to internal water flooding, items such as a line number, an inflow line number, an area, an outflow coefficient, a reaching time, a flow rate, an extension, and a cross section in each of the areas are considered, whereby an amount of rainfall and a flow rate and a water level of a conduit, for example, are calculated in real time so that the possibility of being affected by a disaster in the second designated area may be predicted based on a result of the calculation (see Patent Literature 2).

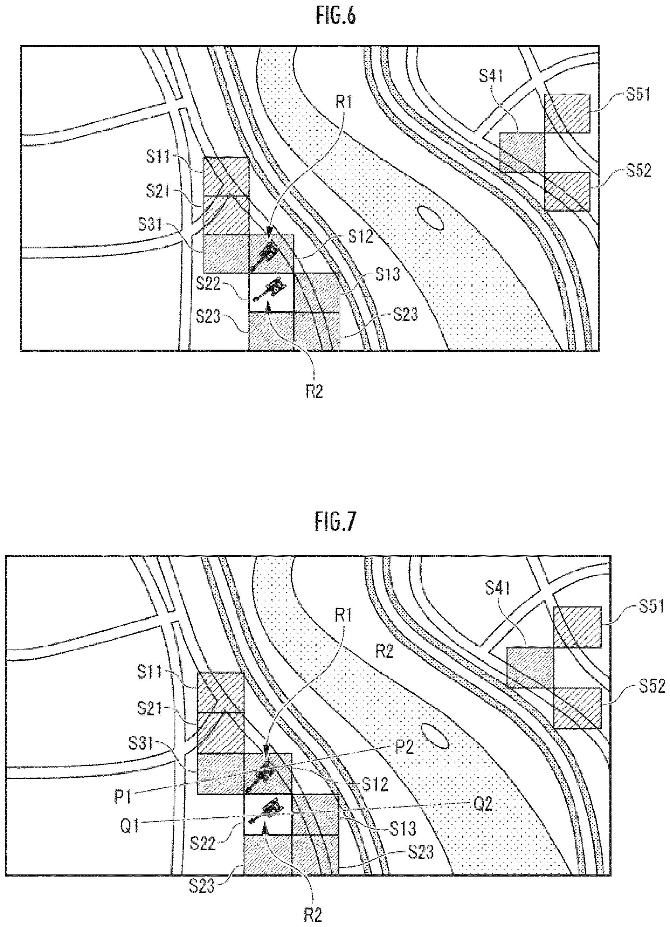

The second support processing element 122 generates a hazard map representing a result of the prediction of the possibility of being affected by a disaster in the second designated area, and the hazard map is transmitted to the remote operation apparatus 20 (FIG. 4/STEP116). As a result, a hazard map light and shade of which indicates whether the possibility of being affected by a disaster is high or low is generated in each of respective meshes Sij (i, j = 1, 2, ...) as rectangular areas constituting the second designated area, as illustrated in FIG. 6, for example. In the hazard map, icons R1 and R2 respectively representing the work machines 40 are illustrated at existence positions of the work machines 40. The possibility of being affected by a disaster may be changed into a numerical value such as "20%" or "50%", and the numerical value may be represented in the hazard map.

The first support processing element 121 may further recognize as disaster factors respective ground levels at a plurality of points in the second designated area by referring to map information stored and held in the database 102, and the second support processing element 122 may generate a hazard map based on the existence position of the work machine 40, the amount of rainfall in the first designated area, and the respective ground levels (disaster factors) at the plurality of points in the second designated area.

In the remote operation apparatus 20, the remote control device 200 receives the hazard map (FIG. 4/C21), and outputs the hazard map to the image output device 221 constituting the remote output interface 220 (FIG. 4/STEP212). As a result, the operator can grasp that the possibility of the first work machine 40, which is represented by a relatively dark colored mesh S21 and thus an icon R1 included in the mesh S21, being affected by a disaster is relatively high. Further, the operator can grasp that the possibility of the second work machine 40, which is represented by a relatively light colored mesh S22 and thus an icon R2 included in the mesh S22, being affected by a disaster is relatively low.

In the remote operation apparatus 20, the remote control device 200 determines whether or not two points or a designated line segment connecting the two points have or has been designated in the hazard map through the remote input interface 210 (FIG. 4/STEP214). If a result of the determination is negative (FIG. 4/NO in STEP214), a series of processes ends. If the result of the determination is affirmative (FIG. 4/YES in STEP214), data representing the designated line segment is transmitted to the disaster countermeasure support server 10 (FIG. 4/STEP216).

As illustrated in FIG. 7, for example, a designated line segment P1 - P2 connecting two points P1 and P2 and a designated line segment Q1 - Q2 connecting two points Q1 and Q2 are designated in the hazard map. The designated line segment P1 - P2 passes through the icon R1, representing the first work machine 40, or its vicinity. The designated line segment Q1 - Q2 passes through the icon R2, representing the second work machine 40, or its vicinity. Two portions on the touch panel showing the hazard map are tapped so that two points corresponding to the two portions may be both end points of the designated line segment. A swipe is performed on the touch panel representing the hazard map so that a line segment conforming to a trajectory of the swipe may be designated as a designated line segment.

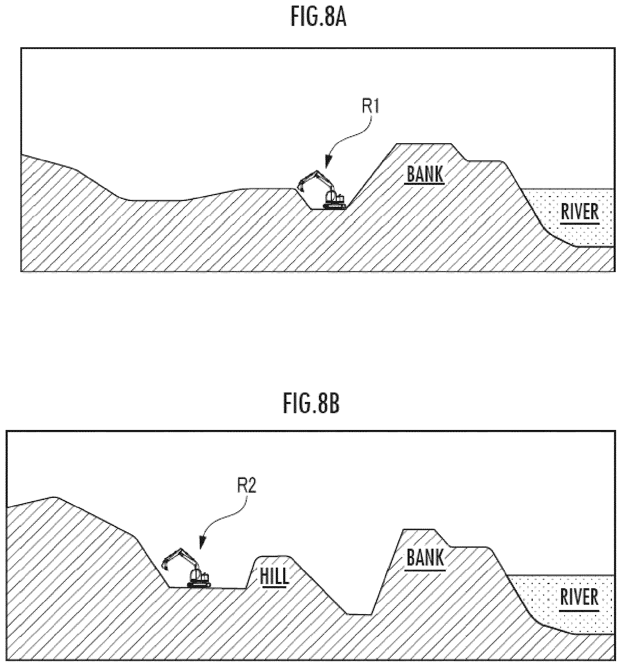

In the disaster countermeasure support server 10, if the second support processing element 122 receives or recognizes data representing the designated line segment (FIG. 4/C12), a designated topographical sectional view along the designated line segment is generated, and is transmitted to the remote operation apparatus 20 (FIG. 4/STEP118). For example, a designated topographical sectional view as illustrated in FIG. 8A is generated along the designated line segment P1 - P2 illustrated in FIG. 7. Further, a designated topographical sectional view as illustrated in FIG. 8B is generated along the designated line segment Q1 - Q2 illustrated in FIG. 7. The designated topographical sectional view may be subjected to a numerical value or a color representing a prediction result of the possibility of being affected by a disaster, like the hazard map.

In the remote operation apparatus 20, if the remote control device 200 receives the designated topographical sectional view (FIG. 4/C22), the designated topographical sectional view is outputted to the image output device 221 constituting the remote output interface 220 (FIG. 4/STEP218). For example, the operator can grasp that a ground level at which the first work machine 40 represented by the icon R1 exists is lower than a water level of a river, the first work machine 40 is at a location relatively close to a bank adjacent to the river, and the possibility of the mesh S21 including the first work machine 40 being affected by a disaster is evaluated to be relatively high in such a situation, for example, through the designated topographical sectional view illustrated in FIG. 8A. Further, the operator can grasp that a ground level at which the second work machine 40 represented by the icon R2 exists is lower than the water level of the river, but the second work machine 40 is at a location where a relatively high hill is interposed between itself and the bank, and the possibility of the mesh S22 including the second work machine 40 being affected by a disaster is evaluated to be relatively low in such a situation, for example, through the designated topographical sectional view illustrated in FIG. 8B.

### (Second Function)

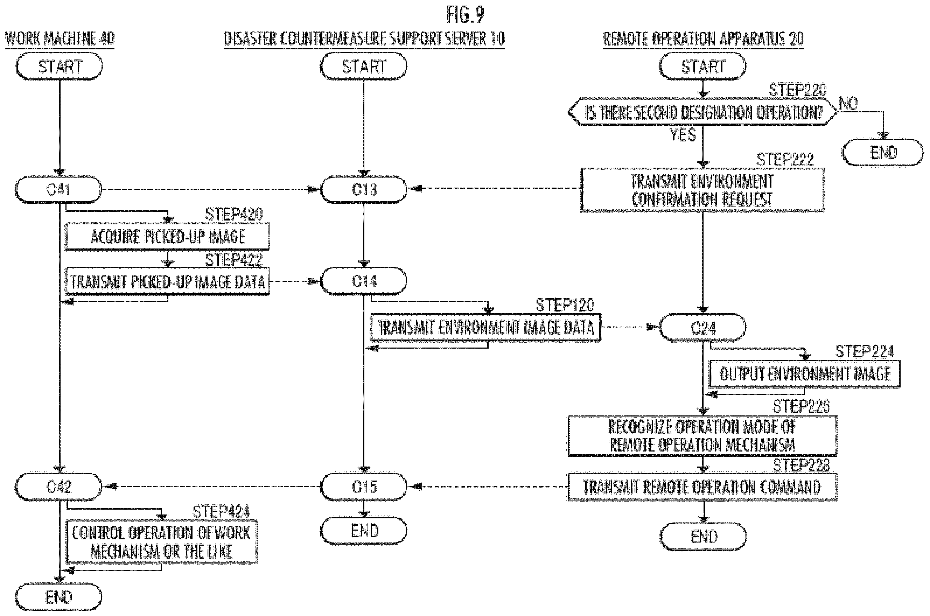

A further function of the disaster countermeasure support system having the above-described configuration will be described with reference to a flowchart illustrated in FIG. 9. The function may be exhibited by a server (remote operation support server) separate from the disaster countermeasure support server.

In the remote operation apparatus 20, the presence or absence of a second designation operation through the remote input interface 210 by the operator is determined (FIG. 9/STEP220). An example of the "second designation operation" is an operation such as a tap in the remote input interface 210 for designating the work machine 40 remote operation of which is intended by the operator. If a result of the determination is negative (FIG. 9/NO in STEP220), processing subsequent to the determination of the presence or absence of the second designation operation is repeated. On the other hand, if the result of the determination is affirmative (FIG. 9/YES in STEP220), an environment confirmation request is transmitted to the disaster countermeasure support server 10 through the remote wireless communication equipment 222 (FIG. 9/STEP222).

In the disaster countermeasure support server 10, if the environment confirmation request is received, the first support processing element 121 transmits the environment confirmation request to the corresponding work machine 40 (FIG. 9/C13).

In the work machine 40, if the environment confirmation request is received through the actual machine wireless communication equipment 422 (FIG. 9/C41), the actual machine control device 400 acquires a picked-up image through the actual machine image pickup device 412 (FIG. 9/STEP420). The actual machine control device 400 transmits picked-up image data representing the picked-up image to the remote operation apparatus 20 through the actual machine wireless communication equipment 422 (FIG. 9/STEP422).

In the disaster countermeasure support server 10, if the first support processing element 121 receives the picked-up image data (FIG. 9/C14), the second support processing element 122 transmits environment image data corresponding to the picked-up image to the remote operation apparatus 20 (FIG. 9/STEP120). The environment image data is not only the picked-up image data itself but also image data representing a simulated environment image generated based on the picked-up image.

In the remote operation apparatus 20, if the environment image data is received through the remote wireless communication equipment 222 (FIG. 9/C24), the remote control device 200 outputs an environment image corresponding to the environment image data to the image output device 221 (FIG. 9/STEP224).

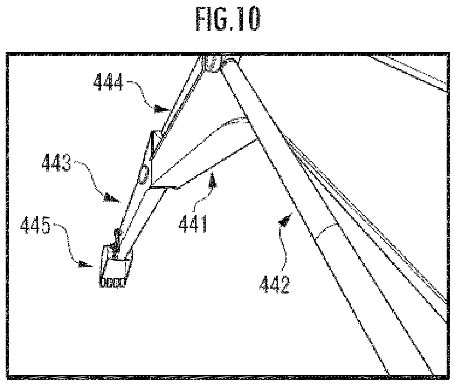

As a result, an environment image on which a boom 441, an arm 443, and a bucket 445, as parts of the work attachment 440, are reflected is outputted to the image output device 221, as illustrated in FIG. 10, for example.

In the remote operation apparatus 20, the remote control device 200 recognizes an operation mode of the remote operation mechanism 211 (FIG. 9/STEP226), and transmits a remote operation command corresponding to the operation mode to the disaster countermeasure support server 10 through the remote wireless communication equipment 222 (FIG. 9/STEP228).

In the disaster countermeasure support server 10, if the second support processing element 122 receives the remote operation command, the first support processing element 121 transmits the remote operation command to the work machine 40 (FIG. 9/C15).

In the work machine 40, if the actual machine control device 400 receives the remote operation command through the actual machine wireless communication equipment 422 (FIG. 9/C42), an operation of the work attachment 440 or the like is controlled (FIG. 9/STEP424). For example, work for scooping soil in front of the work machine 40 using the bucket 445 and dropping the soil from the bucket 445 after turning the upper turning body 420 is performed.

### (Effect)

According to the disaster countermeasure support system having the configuration and the disaster countermeasure support server 10 and the remote operation apparatus 20 constituting the disaster countermeasure support system, the possibility of the work machine 40 being affected by a disaster in the second designated area including an existence position of the work machine 40 is predicted based on an amount of rainfall in the first designated area (see FIG. 4/STEP111 → STEP112 → STEP114).

A hazard map representing a result of the prediction of the possibility of the work machine 40 being affected by a disaster in the second designated area is outputted to the remote output interface 220 in the remote operation apparatus 20 (the client) (or the management output interface 620 in the management client 60) (see FIG. 4/STEP116 → C21 → STEP212 and FIG. 6). This makes it possible to make a user of the remote operation apparatus 20 as the client recognize whether the possibility of the work machine 40 existing in the second designated area being affected by a disaster is high or low through the hazard map. Accordingly, the user can take measures to reduce the possibility of the work machine 40 being affected by a disaster, for example, to communicate with persons involved in order to move the work machine 40 from a current position.

The first support processing element 121 further recognizes respective ground levels at a plurality of points in the second designated area as disaster factors, and the second support processing element 122 generates a hazard map based on an existence position of the work machine 40, an amount of rainfall in the first designated area, and the respective disaster factors at the plurality of points in the second designated area, which have been recognized by the first support processing element 121.

In this case, the possibility of the work machine being affected by a disaster in the second designated area is predicted in such a form that the respective disaster factors, i.e., the respective ground levels at the plurality of points in the second designated area are considered. For example, it is considered that the possibility of the work machine 40 being flooded in a location where the ground level is relatively low is higher than that in a location where the ground level is relatively high, or that the possibility of the work machine 40 being flooded is low because a location is surrounded by a location where the ground level is relatively high even if the ground level thereof is relatively low. As a result, the prediction accuracy of the possibility of the work machine 40 being affected by a disaster at each of the plurality of points in the second designated area is improved, and a hazard map having higher usefulness can be presented to the user of the client such as the remote operation apparatus 20 from the viewpoint of reducing the possibility of the work machine 40 being affected by a disaster.

The first support processing element 121 recognizes a time series pattern of the amount of rainfall in the first designated area, and refers to the database 102 storing past time series patterns of the amount of rainfall in the first designated area and past time series patterns of a disaster-affected state at each of the points in the second designated area in association, so as to recognize the time series pattern of the disaster-affected state in the second designated area most associated with the time series pattern of the amount of rainfall in the first designated area, and the second support processing element 122 predicts a time series pattern of the possibility of the work machine 40 being affected by a disaster based on the time series pattern of the disaster-affected state in the second designated area recognized by the first support processing element 121 and generates a hazard map in the second designated area representing a result of the prediction of the time series pattern of the possibility of the work machine 40 being affected by a disaster.

The possibility of the work machine 40 being affected by a disaster in the second designated area is predicted in such a form that a correlation between the past time series patterns of the amount of rainfall in the first designated area and the past time series patterns of the disaster-affected state in the second designated area, which have been registered in the database 102, is considered. The disaster-affected state is defined by the presence or absence of flooding and a depth of flooding of a house, a vehicle, or the like in the second designated area. For example, the past time series pattern of the disaster-affected state in the second designated area, which corresponds to the past time series pattern of the amount of rainfall in the first designated area, most approximate to the time series pattern of the amount of rainfall in the first designated area is recognized as the most associated time series pattern of the disaster-affected state in the second designated area. The possibility of the work machine 40 being affected by a disaster is evaluated to be high in a time period corresponding to a time period during which the work machine 40 has been affected by a disaster based on the most associated time series pattern of the disaster-affected state in the second designated area. As a result, the prediction accuracy of the possibility of the work machine 40 being affected by a disaster in the second designated area is improved, and a dynamic or time-sequential hazard map having higher usefulness can be presented to the user of the remote operation apparatus 20 or the management client 60 from the viewpoint of reducing the possibility of the work machine being affected by a disaster.

The first support processing element 121 recognizes a designated line segment, which has been designated through the remote input interface 210, connecting two points in the hazard map outputted to the remote output interface 220 based on communication with the remote operation apparatus 20 (the client), and the second support processing element 122 generates a designated topographical sectional view along the designated line segment recognized by the first support processing element 121 and outputs the designated topographical sectional view to the remote output interface 220 based on communication with the remote operation apparatus 20.

The user of the remote operation apparatus 20 (the client) can designate the designated line segment connecting the two points through the remote input interface 210 in the hazard map displayed on the remote output interface 220 and recognize the designated topographical sectional view of the second designated area in the designated line segment in the remote output interface 220 (see FIG. 4/STEP214 → STEP216 → STEP218, and FIG.s 7, 8A, and 8B). As a result, the user can be made to more intuitively grasp a difference between ground levels of different locations, a height of a water level in a river or the like, a disaster-affected depth, or the like, and can be urged to take appropriate measures to reduce the possibility of the work machine being affected by a disaster.

### (Another Embodiment of Present Invention)

A first support processing element 121 may recognize respective disaster factors at a plurality of points in a first designated area instead of or in addition to a second designated area, and a second support processing element 122 may generate a hazard map based on an existence position of a work machine 40, an amount of rainfall in the first designated area, and the respective disaster factors at the plurality of points in at least one designated area of the first designated area and the second designated area. As the disaster factors, a geographical condition may be recognized instead of or in addition to a ground level. The "geographical condition" may be defined by a classification of rocks such as an igneous rock, a sedimentary rock, a metamorphic rock, or may be defined by a classification of a landfill, a current river bed deposit, an old river channel deposit, a natural bank deposit, a dike type, a granite type, and the like conceptualized as a high-level concept.

A hazard map considering that the possibility of the work machine being affected by a landslide disaster in a location where a geological condition is relatively brittle is higher than that in a location where a geological condition is relatively hard is presented to a user of a remote operation apparatus 20 (or a management client 60) (see FIG.s 6 and 7). As a result, the prediction accuracy of the possibility of the work machine being affected by a disaster at each of the plurality of points in the second designated area is improved, and the usefulness of the hazard map is improved from the viewpoint of reducing the possibility of the work machine 40 being affected by a landslide disaster.

A hazard map considering that the possibility of the work machine 40 being affected by a landslide disaster is high because a geological condition at a point in the first designated area (a point proximate to an existence point of the work machine 40) is relatively brittle and a ground level is relatively higher than an existence point of the work machine 40 in the second designated area is presented to the user of the remote operation apparatus 20 (or the management client 60) (see FIG.s 6 and 7). As a result, the prediction accuracy of the possibility of the work machine being affected by a disaster at each of the plurality of points in the second designated area is improved, and the usefulness of the hazard map is improved from the viewpoint of reducing the possibility of the work machine 40 being affected by a landslide disaster.

### Reference Signs List

10...disaster countermeasure support server, 20...remote operation apparatus, 40...work machine, 41...actual machine input interface, 42...actual machine output interface, 102...database, 121...first support processing element, 122...second support processing element, 200...remote control device, 210...remote input interface, 211...remote operation mechanism, 220...remote output interface, 221...image output device, 400...actual machine control device, 410...lower traveling body, 420...upper turning body, 424...cab (operation room), 440...work attachment (operation mechanism), 445...bucket (work portion).

## Claims

1. A disaster countermeasure support server comprising:
a first support processing element configured to recognize a first designated area that affects the possibility of a work machine being affected by a disaster in a second designated area including an existence position of the work machine depending on whether an amount of rainfall is large or small and recognize an amount of rainfall in the first designated area; and
a second support processing element configured to predict the possibility of the work machine being affected by a disaster in the second designated area based on the existence position of the work machine and the amount of rainfall in the first designated area, which have been recognized by the first support processing element, generate a hazard map representing a result of the prediction of the possibility of the work machine being affected by a disaster in the second designated area, and output the hazard map to an output interface in a client based on communication with the client.

2. The disaster countermeasure support server according to claim 1, wherein
the first support processing element further recognizes as a disaster factor at least one of a ground level and a geological condition at each of a plurality of points in at least one designated area of the first designated area and the second designated area, and
the second support processing element generates the hazard map based on the existence position of the work machine, the amount of rainfall in the first designated area, and the disaster factor at each of the plurality of points in at least one designated area of the first designated area and the second designated area, which have been recognized by the first support processing element.

3. The disaster countermeasure support server according to claim 1 or 2, wherein
the first support processing element recognizes a time series pattern of the amount of rainfall in the first designated area and refers to a database storing past time series patterns of the amount of rainfall in the first designated area and past time series patterns of a disaster-affected state at each of the points in the second designated area in association, to recognize the time series pattern of the disaster-affected state in the second designated area most associated with the time series pattern of the amount of rainfall in the first designated area, and
the second support processing element predicts the time series pattern of the possibility of the work machine being affected by a disaster based on the time series pattern of the disaster-affected state in the second designated area recognized by the first support processing element, and generates a hazard map in the second designated area representing a result of the prediction of the time series pattern of the possibility of the work machine being affected by a disaster.

4. The disaster countermeasure support server according to any one of claims 1 to 3, wherein
the first support processing element recognizes a designated line segment, which has been designated through an input interface in the client, connecting two points in the hazard map outputted to the output interface based on communication with the client, and
the second support processing element generates a designated topographical sectional view along the designated line segment recognized by the first support processing element, and outputs the designated topographical sectional view to the output interface in the client based on communication with the client.

5. The disaster countermeasure support server according to any one of claims 1 to 4, wherein
the client comprises a remote operation apparatus configured to remotely operate the work machine.

6. A disaster countermeasure support system comprising the disaster countermeasure support server according to any one of claims 1 to 5 and the client.

7. A disaster countermeasure support method comprising:
an information acquisition step for recognizing a first designated area that affects the possibility of a work machine being affected by a disaster in a second designated area including an existence position of the work machine depending on whether an amount of rainfall is large or small and recognizing an amount of rainfall in the first designated area; and
an information provision step for predicting the possibility of the work machine being affected by a disaster based on the existence position of the work machine and the amount of rainfall in the first designated area, which have been recognized in the information acquisition step, generating a hazard map representing a result of the prediction of the possibility of the work machine being affected by a disaster in the second designated area, and outputting the hazard map to an output interface in a client based on communication with the client.
